# EUROPÄISCHE PATENTSCHRIFT

(11) **EP 1 671 050 B1**
(45) Veröffentlichungstag und Bekanntmachung des Hinweises auf die Patenterteilung: **24.03.2010**
(21) Anmeldenummer: 04765040.3
(22) Anmeldetag: 10.09.2004
(51) Int. Cl.: F16H 13/02, F16H 7/02, F02B 67/06, F01P 5/12

(54) **SCHWENKARM-ANORDNUNG FÜR EIN REIBRADGETRIEBE EINES NEBENAGGREGATES EINER MIT RIEMENGETRIEBENEN HILFSAGGREGATEN AUSGERÜSTETEN BRENNKRAFTMASCHINE**
ARTICULATED-ARM ASSEMBLY FOR A FRICTION GEAR OF A SECONDARY ASSEMBLY IN AN INTERNAL COMBUSTION ENGINE THAT IS EQUIPPED WITH BELT-DRIVEN AUXILIARY ASSEMBLIES
ENSEMBLE BRAS ARTICULE POUR UN ENGRANAGE A FRICTION D'UN GROUPE SECONDAIRE D'UN MOTEUR A COMBUSTION INTERNE EQUIPE DE GROUPES AUXILIARES ENTRAINES PAR COURROIE

(30) Priorität: 07.10.2003 DE 10346426
(43) Veröffentlichungstag der Anmeldung: 21.06.2006
(73) Patentinhaber: Bayerische Motoren Werke Aktiengesellschaft, 80809 München (DE); Peugeot Citroën Automobiles Société Anonyme, 78140 Velizy Villacoublay (FR)
(72) Erfinder: LEMBERGER, Heinz, 85774 Unterföhring (DE)
(74) Vertreter: Bücken, Helmut
(86) Internationale Anmeldenummer: PCT/EP2004/010110
(87) Internationale Veröffentlichungsnummer: WO 2005/038298

(56) Entgegenhaltungen:
- EP-A- 1 388 655
- DE-A- 3 934 884
- DE-B- 1 087 822
- DE-U- 1 810 126
- FR-A- 2 544 825
- US-A- 4 886 483

## Beschreibung

Die Erfindung bezieht sich auf eine Schwenkarm-Anordnung für ein Reibradgetriebe eines Nebenaggregates einer mit riemengetriebenen Hilfsaggregaten ausgerüsteten Brennkraftmaschine, wobei zwischen einem Riemen des Riementriebes der Hilfsaggregate und einem Antriebsrad eines gesondert angeordneten Nebenaggregates ein eine Antriebsverbindung bewirkendes Reibrad mittels eines Schwenkarmes geführt ist, der um eine maschinenseitige Achse schwenkbeweglich angelenkt angeordnet ist.

Eine derartige Schwenkarm-Anordnung ist beispielsweise aus der deutschen Offenlegungsschrift DE 102 55 074 A1 bekannt, wobei ein in einem Lagerauge des Schwenkarmes drehbeweglich angeordneter, von einer vorgespannten Drehfeder beaufschlagter Exzenter als Aktuator des Schwenkarmes auf diesen ziehend oder druckend einwirkt derart, dass das Reibrad in permanenter Antriebsverbindung mit dem Riemen und dem Antriebsrad gehalten ist.

Eine Weiterbildung dieser Schwenkarm-Anordnung ist in der deutschen Offenlegungsschrift DE 103 09 063 A1 offenbart, wobei ein unter Zwischenschaltung einer Freilaufeinrichtung über ein Zahnradgetriebe auf den Exzenter in einer vorbestimmten Drehrichtung einwirkender Servomotor vorgesehen ist zur gesteuerten Unterbrechung der Antriebsverbindung insbesondere zwischen dem Reibrad und dem Antriebsrad des vorzugsweise als Kuhlmittelpumpe gestalteten Nebenaggregates. Mit dieser gesteuerten Deaktivierung der Kuhlmittelpumpe insbesondere beim bis kurzzeitig nach einem Kaltstart der Brennkraftmaschine erwärmt sich diese vorteilhaft schneller.

Bei beiden Gegenständen der vorgenannten Offenlegungsschriften ist der jeweilige Schwenkarm zur Ebene des das Reibrad antreibenden Riemens im wesentlichen gemittelt angeordnet, wobei bekanntlich diese Riemenebene von der Stirnseite der Brennkraftmaschine nicht unerheblich beabstandet ist. Entsprechend dieser Beabstandung angepasst ist in beiden vorgenannten Beispielen an der Stirnseite ein jeweiliger Fortsatz vorgesehen zur Anordnung einer Exzenter - Drehachse.

Eine gattungsgemäße Schwenkarm-Anordnung ist aus der DE 39 34 884 A1 bekannt.

Der Erfindung liegt die Aufgabe zugrunde, eine Schwenkarm-Anordnung aufzuzeigen, mittels der unter Nutzung des durch Fortfall des Fortsatzes gewonnenen Bauraumes eine kompakt bauende Anlenkung und Befestigung des Schwenkarmes bei einfacher Montage erzielt ist.

Diese Aufgabe ist mit dem Patentanspruch 1 dadurch gelost, dass der mit dem Reibrad ausgerüstete Schwenkarm mit einem anlenkseitig angeordneten Exzenter als Aktuator eine Montageeinheit bildet, wobei der Exzenter in einer Befestigungsvorrichtung angeordnet und der Schwenkarm zur Anordnung an der Brennkraftmaschine geeignet ist.

Mit der Erfindung ist der Vorteil gegeben, dass der Schwenkarm als eine komplette baulich-funktionelle Einheit an der Brennkraftmaschine montiert werden kann, wobei als einfachster Aktuator ein drehfederbelasteter Exzenter dienen kann, dem in einer aufwändigeren Ausgestaltung des Aktuators ein Servomotor zugeordnet ist zur gesteuerten Unterbrechung einer der Antriebsverbindungen des Reibrades mit dem Riemen oder mit dem Antriebsrad des Nebenaggregates.

In Ausgestaltung der Erfindung sowohl für den einfach als auch für den aufwändig gestalteten Aktuator wird vorgeschlagen, dass die Befestigungsvorrichtung ein quer zur maschinenseitigen Achse unterteiltes Gehäuse ist mit in einem Gehäuseteil angeordnetem Drehzapfen, auf dem ein in einem anlenkseitigen Lagerauge des Schwenkarmes drehbeweglich angeordneter Exzenter als Aktuator gelagert ist, der entsprechend einem Drehfederantrieb in Zugrichtung oder in Druckrichtung auf den Schwenkarm einwirkt für eine permanente Antriebsverbindung des Reibrades mit dem Riemen und dem Antriebsrad des Nebenaggregates.

Für die gesteuerte Unterbrechung der Reibrad-Antriebsverbindung mittels eines den drehfederbelasteten Exzenter in Gegendrehrichtung gesteuert verstellenden Servomotors wird weiter vorgeschlagen, dass im anderen Gehäuseteil ein auf den Aktuator antreibend einwirkender Servomotor angeordnet ist, der gesteuert über ein Getriebe unter Zwischenschaltung einer sperrenden Freilaufeinrichtung auf den Exzenter in einer der Deaktivierung des Reibrades dienenden Drehrichtung einwirkt, und dass in die andere, der Aktivierung des Reibrades dienenden Gegen-Drehrichtung des Exzenters diesen eine vorgespannte Drehfeder antreibt, wobei die ungesperrte Freilaufeinrichtung eine Drehunterbrechung zum Servomotor bewirkt.

Mit der erfindungsgemäßen Anordnung der Schwenkarm-Anlenkung und des Aktuators in einem als Befestigungsvorrichtung dienenden, mehrteiligen Gehäuse ist eine vorteilhaft kompakte Gestaltung der Schwenkarm-Anordnung für deren einfache Montage an der Brennkraftmaschine erzielt.

In weiterer Ausgestaltung der Erfindung ist als Aktuator-Antrieb für einen Servomotor bevorzugt ein üblicher Gleichstrommotor oder ein bürstenloser Gleichstrommotor oder ein elektrischer Schrittmotor verwendet, wobei als Getriebe ein mehrstufig untersetzendes Stirnradgetriebe oder ein Planetengetriebe vorgesehen ist.

Die erfindungsgemäß als ein Gehäuse gestaltete Befestigungsvorrichtung ist von vorteilhaft einfachem Aufbau dadurch, dass das Gehäuse mit zueinander zentriert ausgebildeten Gehäuseteilen über an diesen angeordneten, korrespondierenden Flanschen mit Durchbrechungen mittels diese durchsetzenden Schraubbolzen an der Brennkraftmaschine befestigt ist, wobei ggf. zu den Schraubbolzen in den Durchbrechungen koaxial angeordnete Dämpfungselemente in beiden Flanschen dämpfungswirksam angeordnet sind. Damit ist in vorteilhafter Weise einer Körperschall-Fortleitung entgegengewirkt.

Hinsichtlich der Schwenkarm-Anlenkung im Gehäuse weist dieses am Außenumfang eine Durchtrittsöffnung auf, die mittels eines lageraugenseitig den Schwenkarm umschließenden, elastischen Balges abgedeckt ist,

Eine für das Handling bei der Montage vorteilhaft glattwandige Ausgestaltung der Schwenkarm-Anordnung ist schließlich dadurch erzielt, dass der Schwenkarm beiderseits einer Längsebene im Bereich seines Armabschnittes und im Bereich eines daran einstückig angeformten, flachzylindrischen Schutzgehäuses für das Reibrad aus halbschalenartigen Elementen gebildet ist, wobei die lösbar oder unlösbar miteinander verbundenen und im Armabschnitt ein Hohlprofil umschließenden Elemente jeweils mit einem axialen Anteil des Schwenkarm-Lagerauges in einstückiger Verbindung stehen. Mit der vorbeschriebenen Ausbildung ist ferner ein biege- und torsionssteifer Schwenkarm erreicht.

Die Erfindung ist anhand eines in der Zeichnung gezeigten Ausführungsbeispiels beschrieben. Es zeigt:
- Fig.1: einen lediglich abschnittsweise gezeigten Riementrieb mit einem Reibrad- getriebe ohne erfindungsgemäßer Schwenkarm-Anordnung zur besseren Veranschaulichung der in
- Fig.2: in einer Explosionsdarstellung gezeigten, erfindungsgemäßen Schwenk- arm-Anordnung eines Nebenaggregates einer mit riemengetriebenen Hilfsaggregaten ausgerüsteten Brennkraftmaschine.

Einem Riementrieb 1 für nicht gezeigte Hilfsaggregate einer Brennkraftmaschine 2 ist ein Reibradgetriebe 3 zugeordnet zur permanenten oder gesteuert unterbrechbaren Antriebsverbindung mittels eines Reibrades 4 zwischen einem Riemen 5 des Riementriebes 1 und einem Antriebsrad 6 eines gesondert an der Brennkraftmaschine 2 angeordneten Nebenaggregates 7. Das mit der Außenseite des Riemens 5 reibschlüssig zusammenwirkende Reibrad 4 ist mittels eines Schwenkarmes 8 relativ zum Antriebsrad 6 geführt, wobei der um eine maschinenseitige Achse 9 schwenkbeweglich angelenkte Schwenkarm 8 mittels eines Aktuators verlagerbar ist zum reibschlüssigen Eingriff des Reibrades 4 mit dem Antriebsrad 6 bei gleichzeitiger Antriebsverbindung mit dem Riemen 5.

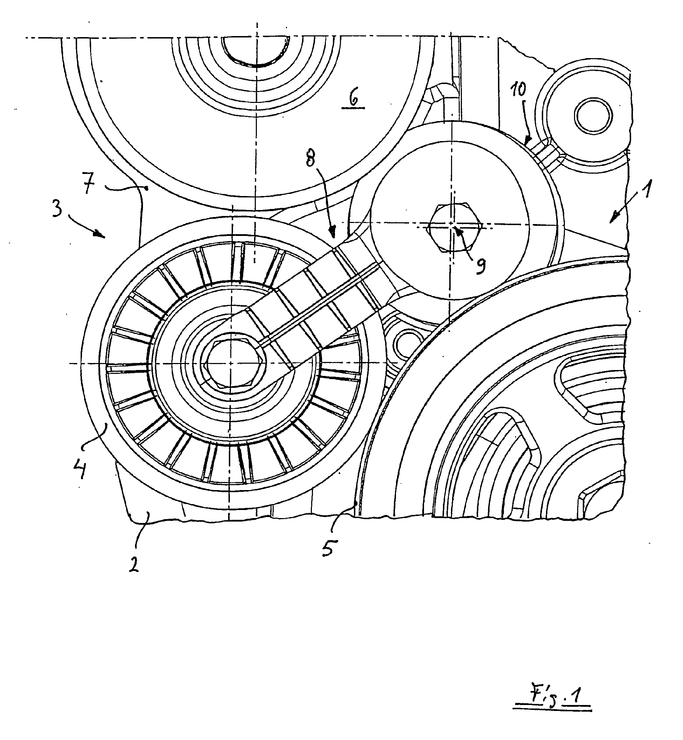

Wie aus Fig.1 weiter ersichtlich, ist die Anlenkung des Schwenkarmes 8 an einem bauraumaufwändigen Fortsatz 10 an der Stirnseite der Brennkraftmaschine 2 vorgesehen.

Zur Erzielung einer Schwenkarm-Anordnung, mittels der unter Nutzung des durch Fortfall des Fortsatzes 10 gewonnenen Bauraumes eine kombinierte, kompakt bauende Anlenkung und Befestigung des Schwenkarmes 8 bei einfacher Montage erzielt ist, wird erfindungsgemäß vorgeschlagen, dass der mit dem Reibrad 4 ausgerüstete Schwenkarm 8 eine Montageeinheit 11 bildet mit einem anlenkseitig angeordneten Aktuator (Exzenter 16) in einer Befestigungsvorrichtung 12 zur kompletten bzw. vollständigen Schwenkarm-Anordnung an der Brennkraftmaschine 2.

Die erfindungsgemäße Befestigungsvorrichtung 12 ist ein quer zur maschinenseitigen Achse 9 unterteiltes Gehäuse 13 mit in einem Gehäuseteil 13' angeordnetem Drehzapfen 14, auf dem ein in einem anlenkseitigen Lagerauge 15 des Schwenkarmes 8 drehbeweglich angeordneter Exzenter 16 als Aktuator gelagert ist, der zur relativen Verlagerung des Schwenkarmes 8 mit Reibrad 4 entsprechend einem Drehfederantrieb 17 vorzugsweise in Zugrichtung auf den Schwenkarm 8 für eine Reibrad-Nachführung einwirkt bei einer nicht gezeigten permanenten Antriebsverbindung des Reibrades 4 mit dem Riemen 5 und dem Antriebsrad 6. Näheres hierzu ist der eingangs genannten Offenlegungsschrift DE 10 255 074 A1 zu entnehmen.

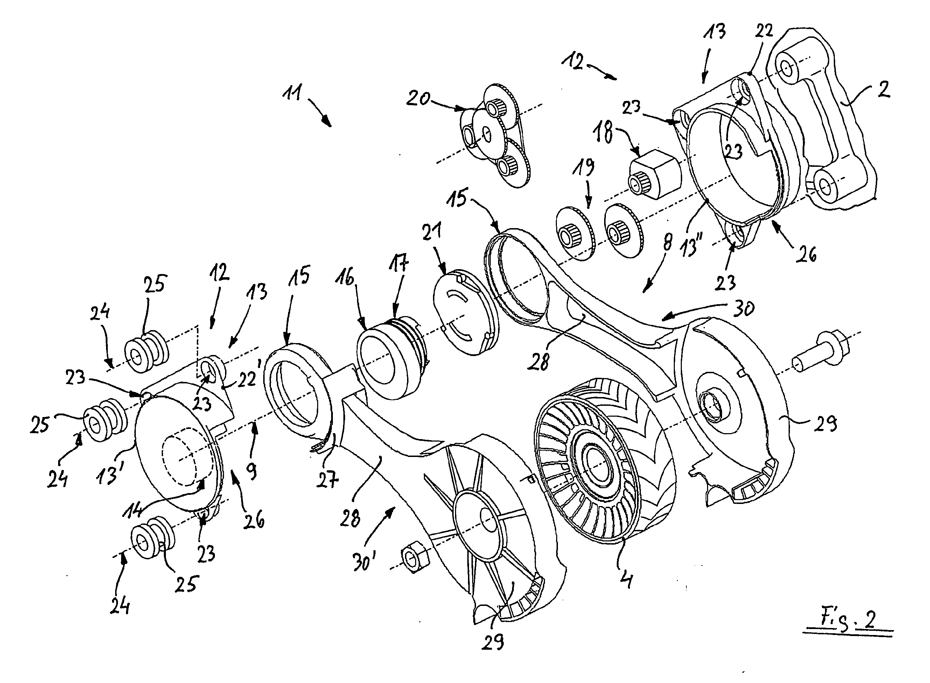

Wie aus der Fig.2 weiter ersichtlich, weist die Schwenkarm-Anordnung einen im anderen Gehäuseteil 13" angeordneten Servomotors 18 auf, der gesteuert über ein Getriebe 19 oder 20 unter Zwischenschaltung einer sperrenden Freilaufeinrichtung 21 auf den Exzenter 16 als Aktuator in einer der Deaktivierung des Reibrades 4 dienenden Drehrichtung gegen den Widerstand des Drehfederantriebes 17 einwirkt. In die andere, der Aktivierung des Reibrades 4 dienenden Gegen-Drehrichtung des Exzenters 16 als Aktuator wirkt an diesem der Drehfederantrieb 17, wobei die ungesperrte bzw. freilaufende Freilaufeinrichtung 21 eine Drehunterbrechung zum Servomotor 18 bewirkt. Für den Fall eines schadhaften oder eine unzureichende Antriebsleistung aufweisenden Servomotors 18 ist mit der Freilaufeinrichtung 21 eine Failsafe-Funktion für die erfindungsgemäße Schwenkarm-Anordnung erzielt, d.h., dass das jeweilige Nebenaggregat 7 bei laufender Brennkraftmaschine 2 und ausgefallenem Servomotor 18 angetrieben ist bzw. bleibt. Weitere Ausführungen hierzu sind der eingangs erwähnten Offenlegungsschrift DE 10 309 063 A1 zu entnehmen.

Als Servomotor 18 dient ein üblicher Gleichstrommotor oder ein bürstenloser Gleichstrommotor oder ein elektrischer Schrittmotor. Das Getriebe 19 kann ein mehrstufig untersetzendes Stirnradgetriebe sein. Auch ein Planetengetriebe 20 ist möglich.

Das Gehäuse 13 mit zueinander zentriert ausgebildeten Gehäuseteilen 13', 13" ist über an diesen angeordneten, korrespondierenden Flanschen 22, 22' mit Durchbrechungen 23 mittels diese durchsetzenden, lediglich symbolisch angedeuteten Schraubbolzen 24 an der Brennkraftmaschine 2 befestigt, wobei ggf. zu den Schraubbolzen 24 in den Durchbrechungen 23 koaxial angeordnete Dämpfungselemente 25 zur Unterdrückung einer Körperschallübertragung in beiden Flanschen 22, 22' dämpfungswirksam angeordnet sind.

Weiter weist das als Befestigungsvorrichtung 12 dienende Gehäuse 13 am Außenumfang eine Durchtrittöffnung 26 für den Schwenkarm 8 auf, die mittels eines lageraugenseitig den Schwenkarm 8 umschließenden, elastischen Balg 27 abgedeckt ist.

Schließlich ist der Schwenkarm 8 beiderseits einer Längsebene im Bereich seines Armabschnittes 28 und im Bereich eines daran einstückig angeformten, flachzylindrischen Schutzgehäuses 29 für das Reibrad 4 aus halbschalenartigen Elementen 30, 30' gebildet, wobei die lösbar oder unlösbar miteinander verbundenen und im Armabschnitt 28 ein Hohlprofil umschließenden Elemente 30, 30' jeweils mit einem axialen Anteil des Lagerauges 15 in einstückiger Verbindung stehen. Diese Ausgestaltung ist in einer weiteren deutschen Offenlegungsschrift DE 103 30 672 A1 näher beschrieben.

Es bleibt im Rahmen der Erfindung, den Exzenter 16 als Aktuator durch einen am Schwenkarm 8 direkt antreibend angeordneten Servomotor als Aktuator zu ersetzen.

Mit der Erfindung ist eine als Ganzes vorteilhaft einfach zu montierende Schwenkarm-Anordnung geschaffen unter geschickter Ausnutzung eines beengten Bauraumes zwischen Riementriebrädern an der Stirnseite der Brennkraftmaschine 2.

## Patentansprüche

1. Schwenkarm-Anordnung für ein Reibradgetriebe eines Nebenaggregates einer mit riemengetriebenen Hilfsaggregaten ausgerüsteten Brennkraftmaschine,
- wobei zwischen einem Riemen (5) des Riementriebes (1) der Hilfsaggregate und einem Antriebsrad (6) eines gesondert angeordneten Nebenaggregates (7) ein eine Antriebsverbindung bewirkendes Reibrad (4) mittels eines Schwenkarmes (8) geführt ist, der
- um eine maschinenseitige Achse (9) schwenkbeweglich angeordnet ist,
**dadurch gekennzeichnet,**
**dass** der mit dem Reibrad (4) ausgerüstete Schwenkarm (8) mit einem anlenkseitig angeordneten Exzenter (16) als Aktuator eine Montageeinheit (11) bildet, wobei der Exzenter (16) in einer Befestigungsvorrichtung (12) angeordnet und der Schwenkarm (8) zur Anordnung an der Brennkraftmaschine (2) geeignet ist.

2. Anordnung nach Anspruch 1, **dadurch gekennzeichnet,**
- **dass** die Befestigungsvorrichtung (12) ein quer zur maschinenseitigen Achse (9) unterteiltes Gehäuse (13) ist mit in einem Gehäuseteil (13') angeordnetem Drehzapfen (14), auf dem
- ein in einem anlenkseitigen Lagerauge (15) des Schwenkarmes (8) drehbeweglich angeordneter Exzenter (16) als Aktuator gelagert ist, der
- entsprechend einem Drehfederantrieb (17) in Zugrichtung oder Druckrichtung auf den Schwenkarm (8) einwirkt für eine relative Verlagerung des Reibrades (4) zum Riemen (5) und zum Antriebsrad (6) des Nebenaggregates (7).

3. Anordnung nach Anspruch 2, **dadurch gekennzeichnet,**
- **dass** im anderen Gehäuseteil (13") ein Servomotor (18) angeordnet ist, der
- gesteuert über ein Getriebe (19, 20) unter Zwischenschaltung einer sperrenden Freilaufeinrichtung (21) auf den Exzenter (16) in einer der Deaktivierung des Reibrades (4) dienenden Drehrichtung einwirkt, und
- **dass** in die andere, einer Aktivierung des Reibrades (4) dienenden Gegen-Drehrichtung des Exzenters (16) bzw. Aktuators diesen eine vorgespannte Drehfeder (17) antreibt, wobei
- die ungesperrte bzw. freilaufende Freilaufeinrichtung (21) eine Drehunterbrechung zum Servomotor (18) bewirkt.

4. Anordnung nach Anspruch 3, **dadurch gekennzeichnet,**
- **dass** als Servomotor (18) ein üblicher Gleichstrommotor oder ein bürstenloser Gleichstrommotor oder ein elektrischer Schrittmotor dient, und
- **dass** als Getriebe ein mehrstufig untersetzendes Stirnradgetriebe (19) oder ein Planetengetriebe (20) vorgesehen ist.

5. Anordnung nach den Ansprüchen 2 bis 4, **dadurch gekennzeichnet,**
- **dass** das Gehäuse (13) mit zueinander zentriert ausgebildeten Gehäuseteilen (13', 13") über an diesen angeordneten, korrespondierenden Flanschen (22, 22') mit Durchbrechungen (23) mittels diese durchsetzenden Schraubbolzen (24) an der Brennkraftmaschine (2) befestigt ist, wobei
- gegebenenfalls zu den Schraubbolzen (24) in den Durchbrechungen (23) koaxial angeordnete Dämpfungselemente (25) in beiden Flanschen (22, 22') dämpfungsunwirksam angeordnet sind.

6. Anordnung nach den Ansprüchen 2 bis 5, **dadurch gekennzeichnet,**
- **dass** das als Befestigungsvorrichtung (12) dienende Gehäuse (13) am Außenumfang eine Durchtrittsöffnung (26) für den Schwenkarm (8) aufweist, die
mittels eines lageraugenseitig den Schwenkarm (8) umschließenden, elastischen Balges (27) überdeckt ist.

7. Anordnung nach einem der Ansprüche 1 bis 6, **dadurch gekennzeichnet,**
- **dass** der Schwenkarm (8) beiderseits einer Längsebene im Bereich seines Armabschnittes (28) und im Bereich eines daran einstückig angeformten, flachzylindrischen Schutzgehäuses (29) für das Reibrad (4) aus halbschalenartigen Elementen (30, 30') gebildet ist, wobei
- die lösbar oder unlösbar miteinander verbundenen und im Armabschnitt (28) ein Hohlprofil umschließenden Elemente (30, 30') jeweils mit einem axialen Anteil des Lagerauges (15) in einstückiger Verbindung stehen.

## Claims

1. A swivel-arm arrangement for a friction gear of a sub-unit of an internal combustion engine equipped with belt-driven auxiliary units,
- wherein, between a belt (5) of the belt drive (1) of the auxiliary unit and a driving wheel (6) of a separate sub-unit (7), a friction wheel (4) forming a drive connection is guided by a swivel arm (8), which
- is disposed so as to be pivotable around a shaft (9) on the engine, **characterised in that**
the swivel arm (8), equipped with the friction wheel (4) together with an actuator in the form of an eccentric (16) disposed on the coupled side, forms an assembly unit (11), wherein the eccentric (16) is disposed in a fastening device (12) and the swivel arm (8) is adapted for mounting on the engine (2).

2. An arrangement according to claim 1, **characterised in that**
- the fastening device (12) is a casing (13) divided transversely of the shaft (9) on the engine and with a pivot pin (14) disposed in a part (13') of the casing, and on which
- an actuator in the form of an eccentric (16) is mounted so as to be rotatable in an eyelet (15) of the swivel arm (8) on the coupled side and
- acts on the swivel arm (8) in the tension or pressure direction, in accordance with a torsion spring drive (17), so as to move the friction wheel (4) relative to the belt (5) and to the driving wheel (6) of the sub-unit(7).

3. An arrangement according to claim 2, **characterised in that**
- a servomotor (18) is disposed in the other part (13") of the casing and,
- controlled by a gear unit (19, 20) with interposition of a locking freewheel device (21), acts on the eccentric (16) in a direction of rotation for inactivating the friction wheel (4) and
- in the other or opposite direction of rotation of the eccentric (16) for actuating the friction wheel (4), a prestressed torsion spring (17) drives the actuator, wherein
- the freewheeling device (21), when unlocked or freewheeling, stops the servomotor (18) from rotating.

4. An arrangement according to claim 3, **characterised in that** the servomotor (18) is a conventional dc motor or a brushless dc motor or an electric stepping motor, and
- the gear unit is a multistage step-down spur gear (19) or an epicyclic gear (20).

5. An arrangement according to claims 2 to 4, **characterised in that**
- the casing (13), the parts (13', 13") of which are centred relative to one another, is fastened to the engine (2) via corresponding flanges (22, 22') and formed with apertures (23) for screw bolts (24), wherein
- damping elements (25), if any, disposed in the apertures (23) coaxially with the screw bolts (24) are inactivated in both flanges (22, 22').

6. An arrangement according to claims 2 to 5, **characterised in that**
- the casing (13) serving as a fastening device (12) has a passage opening (26) on its outer periphery for the swivel arm (8),
- the opening being covered by an elastic bellows (27) which surrounds the swivel arm (8) on the eyelet side.

7. An arrangement according to any of claims 1 to 6, **characterised in that**
- the swivel arm (8), on each side of a longitudinal plane in the region of its portion (28) and in the region of an integrally-moulded flat cylindrical protective casing (29) for the friction wheel (4), is made up of half-shell elements (30, 30'), wherein
- the elements (30, 30'), which are releasably or non-releasably connected to one another and surround a hollow profile in the arm portion (28), are each integrally connected to a respective axial part of the eyelet (15).

## Revendications

1. Ensemble à bras pivotant de transmission à roue à friction d'un équipement auxiliaire d'un moteur à combustion ayant des équipements auxiliaires entraînés par des courroies,
- une roue à friction (4) assurant une liaison d'entraînement guidée par un bras pivotant (8) entre une courroie (5) de la transmission à courroie (1) des équipements auxiliaires et une roue motrice (6) d'un équipement auxiliaire (7) monté de manière particulière,
- ce bras étant monté mobile en pivotement autour d'un axe (9) côté moteur,
**caractérisé en ce que**
le bras pivotant (8) équipé de la roue à friction (4) forme un ensemble de montage (11) avec un excentrique (16) installé côté bras articulé comme actionneur,
l'excentrique (16) étant monté dans un dispositif de fixation (12) et le bras pivotant (8) étant monté sur le moteur à combustion (2).

2. Ensemble selon la revendication 1,
**caractérisé en ce que**
- le dispositif de fixation (12) est un boîtier (13) subdivisé transversalement à l'axe (9) côté moteur avec un axe de rotation (14) logé dans une partie de boîtier (13'),
- sur lequel est monté un excentrique (16) mobile en rotation dans un oeillet de palier (15) du bras pivotant (8), côté articulation, comme actionneur, et
- cet excentrique agit en fonction d'un entraînement à ressort de rotation (17) dans le sens de la traction ou de la compression sur le bras pivotant (8) pour assurer un déplacement relatif de la roue à friction (4) par rapport à la courroie (5) et à la roue motrice (6) de l'équipement auxiliaire (7).

3. Ensemble selon la revendication 2,
**caractérisé en ce que**
- l'autre partie (13") du boîtier loge un servomoteur (18),
- le servomoteur agit de manière commandée par une transmission (19, 20) avec interposition d'une installation à roue libre (21) à blocage sur l'excentrique (16) dans le sens de rotation servant à neutraliser la roue à friction (4), et
- dans l'autre sens de rotation, opposé, de l'excentrique (16) ou actionneur, servant à activer à roue à friction (4), l'entraînement est assuré par un ressort de rotation (17) précontraint, et
- l'installation de roue libre (21) bloquée ou fonctionnant librement, assure la coupure de la rotation vers le servomoteur (18).

4. Ensemble selon la revendication 3,
**caractérisé en ce que**
- le servomoteur (18) est un moteur à courant continu usuel ou un moteur à courant continu sans collecteur ou un moteur électrique pas à pas, et
- la transmission est une transmission à pignons droits (19) d'assistance, à plusieurs étages ou une transmission planétaire (20).

5. Ensemble selon les revendications 2 à 4,
**caractérisé en ce que**
- le boîtier (13) comporte des parties de boîtier (13', 13") centrées l'une par rapport à l'autre et portant des brides (22, 22') correspondantes, munies de passages (23) traversés par des vis (24) pour être fixés au moteur à combustion (2),
- le cas échéant, en plus des vis (24), les passages (23) comportent des éléments d'amortissement (25) installés coaxialement dans les deux brides (22, 22') pour amortir.

6. Ensemble selon les revendications 2 à 5,
**caractérisé en ce que**
- le boîtier (13) servant de dispositif de fixation (12) comporte, à sa périphérie extérieure, un passage (26) pour le bras pivotant (8),
ce passage étant couvert par un soufflet élastique (27) entourant le bras pivotant (8) du côté de l'oeillet de palier.

7. Ensemble selon les revendications 1 à 6,
**caractérisé en ce que**
- le bras pivotant (8) est formé d'éléments (30, 30') en demi-coquille, de part et d'autre d'un plan longitudinal au niveau de son segment de bras (28) et au niveau d'un boîtier de protection (29) cylindrique plat, en une seule pièce avec le bras et recevant la roue à friction (4),
- les éléments (30, 30') reliés l'un à l'autre de manière amovible ou solidaire et enveloppant un profil creux dans le segment de bras (28), sont reliés respectivement à une partie axiale de l'oeillet de palier (15) en une seule pièce.
